# FASCICULE DE BREVET EUROPEEN

(11) **EP 2 925 994 B1**
(45) Date de publication et mention de la délivrance du brevet: **16.10.2019**
(21) Numéro de dépôt: 13808125.2
(22) Date de dépôt: 28.11.2013
(51) Int. Cl.: F02K 9/48, F02K 9/58, F02K 9/44, F02K 9/50, F02K 9/88, F02K 9/94

(54) **ENSEMBLE PROPULSIF POUR FUSÉE**
ANTRIEBSANORDNUNG FÜR RAKETEN
PROPULSION ASSEMBLY FOR ROCKET

(30) Priorité: 30.11.2012 FR 1261466
(43) Date de publication de la demande: 07.10.2015
(73) Titulaire: ArianeGroup SAS, 75015 Paris (FR); Centre National d'Etudes Spatiales (CNES), 75001 Paris (FR)
(72) Inventeur: BARTHOULOT, Jean-Luc, F-27510 Panilleuse (FR); CONRARDY, Jean-Marie, F-27940 Courcelles-sur-Seine (FR); LE BOUAR, Gaëlle, F-27950 Saint-Marcel (FR)
(74) Mandataire: Duflos, Bertrand Guillaume
(86) Numéro de dépôt international: PCT/FR2013/052892
(87) Numéro de publication internationale: WO 2014/083287

(56) Documents cités:
- JP-A- S61 232 371
- US-A- 3 170 295
- US-A- 3 224 189
- US-A- 3 597 923
- US-A- 4 771 601
- US-A- 5 444 973
- US-A- 5 918 460
- US-B2- 6 581 882

## Description

L'invention concerne un ensemble propulsif pour fusée, comprenant un réservoir pour oxygène liquide, un moteur comprenant une chambre de combustion, et un échangeur thermique dit réchauffeur apte à vaporiser de l'oxygène liquide.

Le moteur est habituellement un moteur dans lequel les gaz en sortie de la chambre de combustion sont évacués via une tuyère de manière à développer une poussée.

De tels moteurs sont divulgués par exemple par les documents US 4 771 601 et JP S61 232371.

En général, dans de tels ensembles propulsifs, il est nécessaire de maintenir sous pression le réservoir d'oxygène liquide, afin d'assurer que le débit d'oxygène liquide dirigé vers le moteur soit régulier. Ce maintien en pression est assuré soit en injectant de l'hélium dans le ciel gazeux du réservoir, soit en injectant de l'oxygène en phase vapeur, obtenu par vaporisation d'oxygène liquide dans un échangeur thermique.

L'invention concerne en particulier un ensemble propulsif, selon la revendication 1, qui doit, dans un régime de fonctionnement dit à basse poussée', appliquer à la fusée sur laquelle il est monté une accélération nettement plus faible que la poussée maximale nominale qu'il est capable d'appliquer à la fusée.

Un tel ensemble propulsif est généralement conçu pour respecter les phases de vol suivantes :
Pendant une première phase de fonctionnement du moteur, celui-ci applique à la fusée une accélération prédéterminée, qui permet à la fusée d'atteindre une position et une vitesse prévues en orbite. Cette accélération est en général transmise à la fusée en faisant fonctionner l'ensemble propulsif dans un régime de fonctionnement 'normal', dans lequel le moteur développe la poussée maximale nominale pour laquelle il est conçu.

Lorsque la fusée a atteint la position et la vitesse souhaitées en orbite a lieu le largage du ou des satellites ou d'autres charges transportés à bord de la fusée.

Dans une deuxième phase de fonctionnement du moteur, celui-ci doit alors d'assurer le retour sur terre de la fusée, de telle sorte que celle-ci ne vienne pas encombrer l'espace extra-atmosphérique. Pendant cette phase de retour sur terre de la fusée, il est nécessaire d'assurer le guidage de la fusée jusqu'à la zone prévue pour son atterrissage (le plus souvent située en mer).

Pendant cette phase de retour, la masse de la fusée est bien plus faible que celle qu'elle a avant le largage des satellites. De plus, la force de gravité tend plutôt à faire accélérer la fusée qu'à la ralentir. Par conséquent, pour que la poussée du moteur permette le guidage de la fusée et que celle-ci reste contrôlable, il est nécessaire que le moteur pendant la phase de retour applique à la fusée une accélération nettement plus faible que la poussée maximale nominale.

En outre, le plan de vol de la fusée peut également comprendre certaines manoeuvres orbitales, destinées à modifier l'orbite de la fusée après que celle-ci a rejoint une première orbite. Pendant ces manoeuvres, pour les raisons indiquées précédemment, la poussée attendue du moteur de la fusée est nettement plus faible que la poussée maximale nominale.

Jusqu'à présent, le fonctionnement à basse poussée d'ensembles propulsifs du type présenté en introduction a été principalement obtenu en réduisant le débit d'alimentation en ergols du moteur.

Cependant, il est apparu que lorsque le débit d'un ergol est très faible, des phénomènes oscillatoires peuvent apparaître entre la chambre de combustion et les circuits d'alimentation en ergol reliant les réservoirs d'ergol à la chambre de combustion. Ces phénomènes oscillatoires entraînent de fortes fluctuations de la poussée du moteur, évidemment néfastes au guidage de la fusée pendant la phase de retour.

Pour mettre fin à ces phénomènes oscillatoires, dans le cas où l'ergol considéré est de l'oxygène et notamment où le moteur est agencé pour, dans un régime de fonctionnement assurant la poussée maximale nominale, injecter l'oxygène dans la chambre de combustion via les injecteurs en phase liquide, le remède qui a été appliqué a consisté à injecter l'oxygène dans le moteur non pas en phase liquide, mais en phase vapeur. Il a été constaté que cette mesure réduit considérablement les phénomènes oscillatoires.

Cependant, pour atteindre ce résultat, il a été nécessaire d'ajouter dans le moteur un réchauffeur additionnel, servant à vaporiser l'oxygène. Cette modification entraîne donc dans la fusée un poids, un coût, et une complexité additionnels qu'il serait souhaitable d'éviter.

L'objectif de l'invention est donc de proposer un ensemble propulsif du type présenté en introduction, qui soit plus performant, par exemple en terme de poids, de complexité, et/ou de prix, etc., que les ensembles propulsifs de types connus, et qui respecte le cahier des charges suivants :
- être apte à fonctionner dans un régime dit normal, dans lequel le moteur applique à la fusée sur laquelle il est monté une poussée maximale nominale ;
- être également apte à fonctionner dans un régime de basse poussée, dans lequel le moteur applique à la fusée une basse poussée nettement plus faible que la poussée maximale nominale ;
- cela tout en évitant l'apparition de phénomènes oscillatoires dans les circuits d'alimentation en ergols de l'ensemble propulsif.

Cet objectif est atteint par un ensemble propulsif du type présenté en introduction, grâce au fait que l'ensemble propulsif comporte un circuit d'oxygène vaporisé apte à diriger l'oxygène vaporisé par le réchauffeur dans un premier mode de fonctionnement (dit fonctionnement à basse poussée), uniquement vers la chambre de combustion ; et dans un deuxième mode de fonctionnement (dit fonctionnement à haute poussée), uniquement vers le réservoir.

Ainsi dans l'ensemble propulsif, un échangeur thermique unique, dit réchauffeur, sert d'une part, en fonctionnement à basse poussée, à vaporiser de l'oxygène pour alimenter le moteur en oxygène en phase vapeur ; et d'autre part, en fonctionnement normal à haute poussée, à assurer le maintien d'une pression constante dans le réservoir d'oxygène. L'invention permet donc avantageusement de réaliser ces deux fonctions, et donc d'assurer ces deux modes de fonctionnement, avec le même réchauffeur. En ce qui concerne l'énergie absorbée par le réchauffeur, le plus souvent le moteur est agencé de telle sorte que l'énergie utilisée dans le réchauffeur pour vaporiser l'oxygène est prélevée sur des gaz d'échappement du moteur. Par 'gaz d'échappement', on désigne ici l'ensemble des gaz produits dans la chambre de combustion du moteur.

En sortie du réchauffeur, l'oxygène vaporisé par le réchauffeur est distribué par le circuit d'oxygène vaporisé.

Dans un mode de réalisation, ce circuit est agencé de la manière suivante : l'ensemble propulsif comprend une conduite principale d'alimentation du moteur en oxygène, qui relie le réservoir à la chambre de combustion pour permettre l'alimentation du moteur en oxygène liquide ; et le circuit d'oxygène vaporisé comprend des moyens de valve permettant de relier sélectivement la chambre de combustion soit à ladite conduite principale pour permettre son alimentation en oxygène liquide, soit au circuit d'oxygène vaporisé pour permettre son alimentation en oxygène vaporisé.

Dans un mode de réalisation, le circuit d'oxygène vaporisé comprend des moyens de valve permettant de diriger l'oxygène vaporisé sélectivement soit vers le réservoir, soit vers la chambre de combustion, mais pas les deux en même temps. En effet il est apparu qu'en fonctionnement à basse poussée, il n'est pas nécessaire de maintenir une pression constante dans le réservoir d'oxygène.

Comme moyens de valve, le circuit d'oxygène peut ainsi comporter une valve à trois voies, apte à diriger le flux d'oxygène vaporisé provenant du réchauffeur soit vers la chambre de combustion, soit vers le réservoir.

D'autre part, le circuit d'oxygène vaporisé peut comporter une partie de circuit en dérivation entre des points de dérivation amont et aval agencés sur la conduite principale. Ce mode de réalisation permet avantageusement que des parties aval et amont de la conduite principale, situées respectivement en aval et en amont des points de dérivation du circuit d'oxygène vaporisé, soient utilisée pour le transfert d'oxygène liquide en fonctionnement normal, et d'oxygène vaporisé en fonctionnement à basse poussée.

Parallèlement à la circulation d'oxygène vaporisé, différentes dispositions peuvent être adoptées pour réguler l'alimentation du moteur en oxygène liquide. Dans un mode de réalisation, le moteur peut comporter une valve pour oxygène liquide, disposée sur la conduite principale entre les points de dérivation amont et aval, et qui permet d'ouvrir ou de fermer la conduite principale. La fermeture de la valve pour oxygène liquide permet d'assurer qu'en fonctionnement à basse poussée, seul de l'oxygène vaporisé est injecté dans le moteur.

L'ensemble propulsif selon l'invention peut comprendre différents types de moteurs.

L'ensemble propulsif peut ainsi être réalisé sur la base d'un moteur de type 'Tap-off', c'est-à-dire un moteur dans lequel des gaz d'échappement sont prélevés pour fournir de l'énergie (sous forme thermique et/ou mécanique) à certaines parties du moteur.

Dans un mode de réalisation, le réchauffeur est un échangeur thermique permettant l'échange de chaleur entre l'oxygène et des gaz d'échappement du moteur. Le réchauffeur peut être disposé à différents emplacements.

Il peut tout d'abord être agencé au moins en partie dans une paroi de la chambre de combustion et/ou d'une tuyère d'éjection du moteur. Cependant, il peut également être agencé à distance de la chambre de combustion et d'une tuyère d'éjection du moteur. Dans ce cas, l'ensemble propulsif comprend un circuit de gaz d'échappement servant à prélever des gaz d'échappement du moteur et à les transporter jusqu'au réchauffeur. Avantageusement, le circuit de gaz d'échappement peut permettre en outre d'injecter les gaz d'échappement prélevés dans au moins une turbine, pour actionner celle(s)-ci. La ou les turbine(s) peu(ven)t être celle(s) des turbopompes d'alimentation du moteur en ergol, par exemple les turbopompes d'alimentation en oxygène et en hydrogène.

Lorsque les gaz d'échappement prélevés sont utilisés pour actionner une turbine, de préférence l'échangeur thermique est situé en aval de ladite au moins une turbine dans le circuit de prélèvement de gaz d'échappement.

Lorsque les gaz d'échappement prélevés sont utilisés pour actionner une ou plusieurs turbine(s), l'ensemble propulsif peut comprendre en outre une conduite de bipasse, reliant deux points du circuit de gaz d'échappement disposés respectivement en amont et en aval de ladite au moins une turbine. La conduite de bipasse doit alors pouvoir être ouverte ou fermée, à l'aide de valve(s), selon le mode de fonctionnement du moteur : Elle doit pouvoir être fermée pour permettre que les turbines soient entraînées par les gaz d'échappement prélevés ; elle doit pouvoir être ouverte dans le but inverse.

L'ensemble propulsif peut également être réalisé sur la base d'un moteur de type 'Expander', c'est-à-dire un moteur dans lequel un fluide caloporteur, notamment un ergol (dans le cas présent de l'hydrogène) est prélevé et vaporisé, afin de fournir de l'énergie (sous forme thermique et/ou mécanique) à certaines parties du moteur.

Ainsi, l'ensemble propulsif peut comprendre un circuit de circulation d'un fluide caloporteur, comprenant un échangeur thermique primaire permettant qu'une énergie thermique soit cédée par des gaz d'échappement à un fluide caloporteur, ainsi que le réchauffeur, celui-ci constituant un échangeur thermique secondaire permettant qu'une énergie thermique soit cédée par le fluide caloporteur à l'oxygène. L'utilisation d'un fluide caloporteur intermédiaire apporte une souplesse dans l'agencement du réchauffeur et du circuit d'oxygène vaporisé.

Le fluide caloporteur peut permettre le transfert d'énergie non seulement sous forme thermique, mais également sous forme mécanique. Dans ce but, dans l'ensemble propulsif, l'échangeur thermique primaire est apte à vaporiser le fluide caloporteur ; et le circuit de circulation de fluide caloporteur peut permettre d'injecter le fluide caloporteur vaporisé dans au moins une turbine pour actionner celle(s)-ci. La vaporisation du fluide caloporteur permet avantageusement de disposer d'un fluide sous pression ; l'énergie apportée au fluide caloporteur peut alors être récupérée via une ou plusieurs turbines. Cette ou ces turbine(s) peuvent être notamment celles des turbopompes des circuits d'alimentation en ergols du moteur.

De préférence, le fluide caloporteur est un autre ergol consommé par le moteur, par exemple de l'hydrogène.

L'invention sera bien comprise et ses avantages apparaîtront mieux à la lecture de la description détaillée qui suit, de modes de réalisation représentés à titre d'exemples non limitatifs. La description se réfère aux dessins annexés, sur lesquels :
- les figures 1 et 2 sont des vues schématiques d'un premier ensemble propulsif selon l'invention, comprenant un moteur de type 'expander', respectivement en fonctionnement normal, et en fonctionnement à basse poussée ;
- les figures 3 et 4 sont des vues schématiques d'un second ensemble propulsif selon l'invention, comprenant un moteur de type 'tap-off', respectivement en fonctionnement normal, et en fonctionnement à basse poussée.

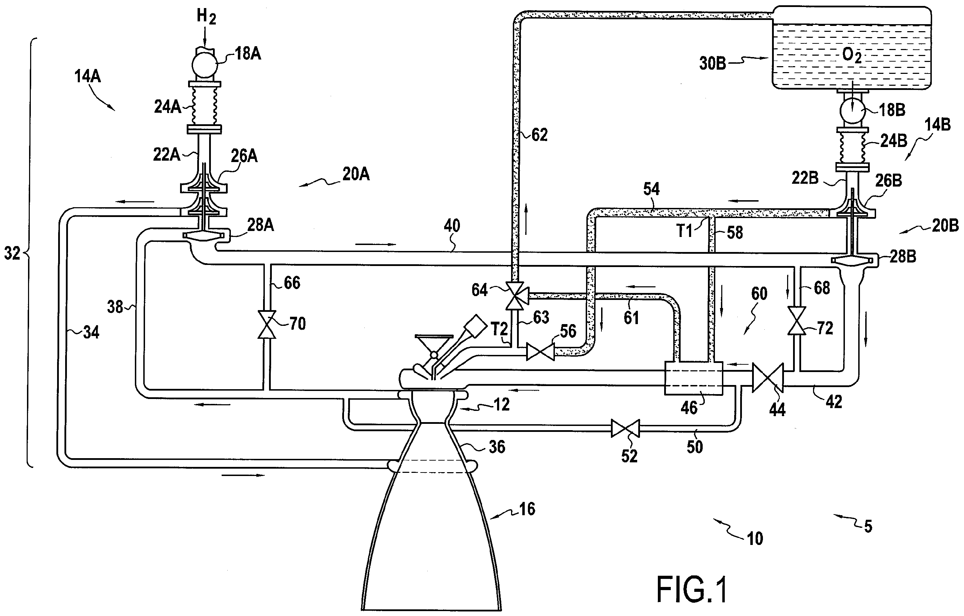

En faisant référence à la figure 1, un ensemble propulsif 5 comprenant un moteur 10 pour fusée va maintenant être décrit.

L'ensemble propulsif 5 comprend un réservoir d'hydrogène (30A) non représenté, un réservoir d'oxygène 30B, un échangeur thermique dit réchauffeur 46, un circuit de distribution de fluides 32, et un moteur 10.

Le moteur 10 est un moteur dit 'Expander'. Dans ce moteur, un comburant et un carburant sont brûlés dans une chambre de combustion avant d'être éjectés via une tuyère. Dans l'exemple présenté, le carburant est de l'hydrogène et le comburant de l'oxygène ; d'autres carburants que l'hydrogène peuvent être utilisés dans le cadre de l'invention.

Les parties fonctionnelles du moteur 10 sont notamment une chambre principale de combustion 12, et une tuyère 16 présentant un divergent.

Le circuit de distribution de fluides 32 comporte deux circuits d'alimentation 14A,14B du moteur, respectivement en hydrogène et en oxygène liquide, et un circuit dit circuit d'oxygène vaporisé dont le rôle sera décrit par la suite.

Les parties amont des deux circuits d'alimentation 14A et 14B sont similaires : Chacune comporte une pompe de gavage (18A,18B), un tronçon flexible (24A,24B), et une conduite d'alimentation (22A,22B) reliant le réservoir (réservoirs 30A, 30B) à une turbopompe (turbopompes 20A, 20B).

Dans un mode de réalisation voisin, les circuits d'alimentation peuvent être réalisés sans les pompes de gavage 18A et 18B.

Les deux turbopompes 20A,20B sont donc alimentées respectivement en hydrogène liquide et en oxygène liquide en provenance des réservoirs 30A et 30B via les parties amont des circuits d'alimentation 14A et 14B.

Les turbopompes 20A et 20B sont des turbopompes de types connus en soi respectivement pour l'hydrogène et pour l'oxygène. Chacune d'elles comprend une pompe (pompes 26A,26B) associée à une turbine (turbines 28A,28B). La pompe 26A est une pompe à deux étages alors que la pompe 26B ne comporte qu'un seul étage. Les pompes 26A,26B servent respectivement à pomper l'hydrogène et l'oxygène depuis les réservoirs 30A, 30B dans lesquels ils sont stockés afin qu'ils soient injectés dans le moteur 10 via les parties aval des circuits d'alimentation 14A,14B. Le réservoir d'oxygène 30B de l'ensemble propulsif alimente ainsi la chambre de combustion 12 en oxygène liquide via le circuit d'alimentation 14B.

L'agencement respectif des circuits d'alimentation 14A et 14B va maintenant être décrit plus en détail.

### Circuit de l'hydrogène

La pompe 26A refoule l'hydrogène liquide via une conduite 34 jusqu'à l'échangeur thermique 36 (échangeur primaire), qui est agencé dans la paroi de la tuyère 16 et de la chambre de combustion 12.

Dans l'échangeur 36, l'hydrogène circule au contact de la tuyère 16 et de la chambre de combustion 12. Sous l'effet de la chaleur, l'hydrogène se vaporise. En sortie de l'échangeur 36, le flux d'hydrogène vaporisé est dirigé via une conduite 38 jusqu'à la turbine 28A de la turbopompe 20A. La pression de l'hydrogène traversant la turbine 28A actionne la pompe 26A.

L'hydrogène vaporisé, en sortie de la turbine 28A, est dirigé via une conduite 40 jusqu'à un orifice d'admission de la turbine 28B. La pression de l'hydrogène traversant la turbine 28B actionne alors la pompe 26B.

En sortie de la turbine 28B, l'hydrogène vaporisé est dirigé par une conduite 42, via une valve 44 et l'échangeur de chaleur 46 (échangeur secondaire), jusqu'au moteur 10. L'hydrogène est alors injecté dans la chambre de combustion 12. Ainsi, le circuit d'alimentation 14A du moteur en hydrogène comporte successivement la conduite 34, l'échangeur 36, et les conduites 38, 40 et 42.

Par ailleurs, une conduite de bipasse 50 équipée d'une valve 52 relie la conduite 38 à un piquage prévu sur la conduite 42 et disposé entre la valve 44 et le réchauffeur 46. D'autre part, pour permettre le bipasse des turbines 28A et 28B, le circuit 32 est équipé de conduites de bipasse 66 et 68, équipées de valves 70 et 72. Ces conduites respectivement relient les orifices d'admission et de refoulement des turbines 28A et 28B. Le rôle des conduites 50,66,68, des valves 52,70,72, sera détaillé par la suite.

### Circuit de l'oxygène

La pompe 26B refoule l'oxygène liquide dans une conduite 54, dite conduite principale, sur laquelle est disposée une valve d'arrêt 56. L'oxygène est dirigé via la conduite 54 jusqu'au moteur 10, dans lequel il est injecté dans la chambre de combustion 12.

### Circuit d'oxygène vaporisé

Le circuit de distribution de fluides 32 comporte en outre un circuit d'oxygène vaporisé. Le circuit d'oxygène vaporisé est un circuit grâce auquel de l'oxygène liquide est prélevé et dirigé dans le réchauffeur 46, dans lequel il est vaporisé, avant d'être dirigé soit vers la chambre de combustion 12, soit vers le réservoir d'oxygène 30B, selon le mode de fonctionnement choisi.

Pour minimiser la taille du circuit d'oxygène vaporisé, celui-ci est réalisé de préférence comme un circuit de dérivation, aménagé entre deux points de dérivation de la conduite principale. C'est ainsi qu'est réalisé le circuit d'oxygène vaporisé 60. Celui-ci comporte une conduite de dérivation amont 58 piquée en un point de dérivation T1 sur la conduite principale 54. L'oxygène liquide prélevé dans la conduite 54 est dirigé par la conduite 58 dans le réchauffeur 46 dans lequel il est vaporisé.

Le réchauffeur 46 fonctionne de la manière suivante : L'hydrogène vaporisé, relativement chaud (car ayant été vaporisé et réchauffé par les gaz d'échappement du moteur 10 dans l'échangeur thermique 36) traverse le réchauffeur 46. Ce flux d'hydrogène est mis au contact de l'oxygène plus froid provenant du réservoir d'oxygène 30B. Le réchauffeur 46 réchauffe le flux d'oxygène provenant de la conduite 58 et le vaporise.

L'oxygène sort vaporisé du réchauffeur 46 par une conduite 61 et est injecté dans une valve à trois voies 64, dite valve VSR ('Valve sortie réchauffeur'). La valve 64 permet de diriger le flux d'oxygène vaporisé soit vers le ciel gazeux du réservoir 30B via une conduite 62, soit à la conduite 54 d'injection d'oxygène et par suite au moteur 10, via une conduite 63. La conduite 63 rejoint la conduite 54 en un point de dérivation (point de dérivation aval) T2. La valve d'arrêt 56 de la conduite 54 est située en amont du point de dérivation T2.

### Fonctionnement de l'ensemble propulsif 5

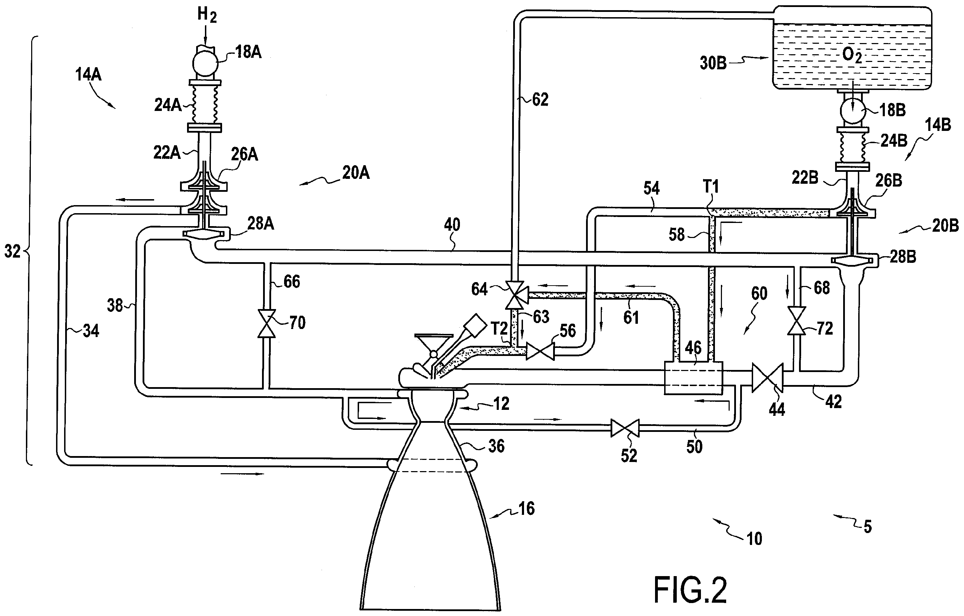

La figure 1 illustre le fonctionnement du moteur en fonctionnement normal à haute poussée, et la figure 2 en fonctionnement 'à basse poussée'.

En régime de fonctionnement normal, la valve 64 est positionnée de telle sorte que l'oxygène vaporisé sortant du réchauffeur 46 soit dirigé vers le ciel gazeux du réservoir 30B via la conduite 62. L'injection d'oxygène en phase vapeur dans le réservoir 30B permet de réguler la pression régnant dans ce réservoir et ainsi de stabiliser l'alimentation du moteur 10 en oxygène. Le débit est alors nul dans la conduite 63. La valve 56 est ouverte pour permettre l'alimentation du moteur 10 en oxygène liquide, et la valve 44 est ouverte pour permettre l'alimentation du moteur 10 en hydrogène liquide. La valve 52 est fermée et le débit est nul dans les conduites 50, 66, et 68. Ainsi, l'hydrogène vaporisé sortant de l'échangeur thermique 36 transite via les turbines 28A et 28B avant d'être injecté dans le moteur 10 via la conduite 42. Par conséquent, la pression de l'hydrogène vaporisé actionne les turbines 28A, 28B et par suite les pompes 26A, 26B. Pendant cette phase, les positions des vannes 70 et 72, qui permettent le bipasse respectivement des turbines 28A et 28B, sont contrôlées de manière à régler le débit dans ces turbines afin d'ajuster le fonctionnement du moteur et de réguler la poussée appliquée par celui-ci.

En régime de fonctionnement 'basse poussée' au contraire, la valve 64 est positionnée de telle sorte que l'oxygène vaporisé sortant du réchauffeur 46 soit dirigé vers la conduite 54, et uniquement vers celle-ci, via la conduite 63. Le moteur 10 est ainsi alimenté en oxygène vaporisé, et uniquement en oxygène vaporisé car simultanément la valve d'arrêt 56 de la conduite principale 54 est fermée.

D'autre part, dans ce mode de fonctionnement il est inutile d'entraîner les turbopompes 20A et 20B. Les pompes 26A et 26B sont actionnées seulement sous l'effet de la pression du fluide provenant des réservoirs. Leur débit est donc relativement faible, mais s'avère suffisant pour un fonctionnement à basse poussée.

Dans ce mode de fonctionnement, la vanne 44 est fermée, ce qui fait que les turbines 28A et 28B ne sont pas alimentées. La valve 52 de la conduite 50 est ouverte, et c'est donc par la conduite 50 que l'hydrogène vaporisé sortant de l'échangeur 36 rejoint la conduite 42 (le débit restant nul dans les conduites 38 et 40). L'hydrogène vaporisé ainsi injecté dans la conduite 42 est introduit dans l'échangeur 46. Il y transfère une partie de sa chaleur à l'oxygène qui y circule et vaporise ainsi l'oxygène circulant dans l'échangeur 46.

Simultanément, la valve 56 de la conduite 54 est fermée. Par conséquent, seul l'oxygène circulant dans le circuit d'oxygène vaporisé est injecté dans le moteur 10, via les conduites 58, 61, 63, et via le tronçon aval de la conduite 54. Il s'ensuit que seul de l'oxygène vaporisé est injecté dans le moteur 10.

L'alimentation du moteur 10 en oxygène en phase gazeuse a pour intérêt que le flux d'oxygène, tout en ayant un débit volumique suffisant pour pouvoir être régulé et stabilisé, présente néanmoins un débit massique très faible, d'où il s'ensuit que la puissance du moteur est nettement réduite. Il est ainsi possible de mettre en oeuvre le moteur 10 avec une puissance inférieure à 75% de sa puissance nominale.

Dans le moteur 10, l'oxygène est vaporisé par l'hydrogène préalablement vaporisé. L'hydrogène est disponible en phase vapeur du fait que le moteur est du type 'expander' et est prévu pour être alimenté avec de l'hydrogène en phase vapeur. Dans ce moteur, le circuit (conduites 34, 38, échangeurs 36 et 46) de distribution et de vaporisation d'hydrogène constitue un circuit de circulation de fluide caloporteur, dans lequel l'hydrogène intervient comme fluide caloporteur. Ce circuit permet que de l'énergie thermique soit cédée par des gaz d'échappement à l'hydrogène, puis transmise par l'hydrogène à l'oxygène.

L'apport de chaleur à l'oxygène pour permettre sa vaporisation peut aussi être réalisé sans l'intermédiaire d'un fluide caloporteur, en particulier dans des ensembles propulsifs comprenant des moteurs qui ne sont pas du type 'Expander', mais par exemple de type 'Tap-off'. Dans de tels moteurs, une partie des gaz d'échappement est prélevée pour apporter de l'énergie à différents organes du moteur.

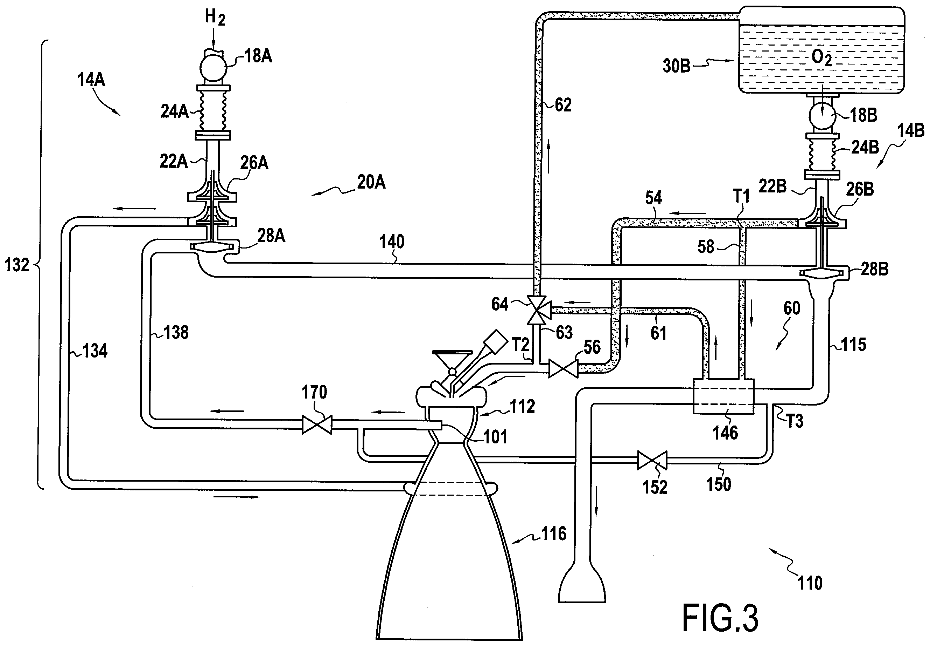

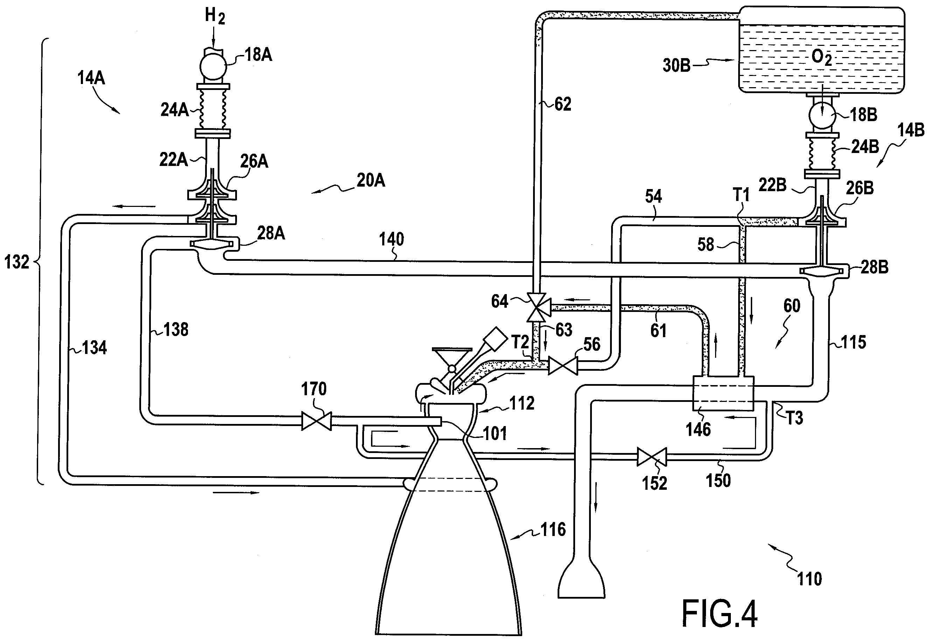

A titre d'exemple, un ensemble propulsif 105 selon l'invention va maintenant être décrit en relation avec les figures 3 et 4. Sauf mention contraire, l'ensemble propulsif 105 est identique à l'ensemble propulsif 5. Par suite, seules seront décrites les caractéristiques de l'ensemble propulsif 105 qui le distinguent de l'ensemble propulsif 5. Par ailleurs, les éléments soit identiques soient similaires portent les mêmes références dans ces deux modes de réalisation de l'invention.

Comme l'ensemble propulsif 5, l'ensemble propulsif 105 comprend un réservoir d'hydrogène (30A) non représenté, un réservoir d'oxygène 30B, un réchauffeur 146, un circuit de distribution de fluides 132, et un moteur 110.

Les réservoirs d'hydrogène et d'oxygène 30B, les parties amont des circuits d'alimentation 14A et 14B, sont identiques dans l'ensemble 105 et l'ensemble 5.

### Circuit de l'hydrogène

La pompe 26A refoule l'hydrogène liquide via une conduite 34 jusqu'à l'échangeur thermique 136. Celui-ci est identique à l'échangeur 36, sauf que le flux d'hydrogène vaporisé sortant de l'échangeur 136, au lieu d'être dirigé vers la turbine 28A via la conduite 38 (ensemble 5), est directement injecté dans la chambre de combustion 12 du moteur 10.

### Circuit des gaz d'échappement

L'ensemble 5 comporte en outre un circuit de gaz d'échappement. Ce circuit comporte en amont un ou plusieurs orifice(s) de prélèvement 101 permettant de prélever une partie des gaz d'échappement dans la chambre de combustion 12 (Ils auraient également pu être prélevés dans la tuyère 16). Les gaz prélevés sont dirigés via une conduite 138 comportant une valve 170 jusqu'à la turbine 28A. En sortie de cette turbine, une conduite 140 recueille les gaz d'échappement et les dirige vers la turbine 28B. Le circuit des gaz d'échappement permet donc d'actionner les turbines 28A et 28B et par suite les pompes 20A et 20B. En sortie de la turbine 28B, les gaz d'échappement sont dirigés par une conduite 115 vers un orifice d'échappement externe 116.

Le réchauffeur 146 est interposé sur la conduite 115. Comme le réchauffeur 46, il sert à vaporiser l'oxygène liquide qui le traverse ; cependant le réchauffeur 146 prélève de la chaleur à partir des gaz d'échappement circulant dans la conduite 115, et non à partir d'hydrogène vaporisé.

Par ailleurs, une conduite de bipasse 150 équipée d'une valve 152 relie la conduite 138 à un piquage T3 prévu sur la conduite 115 et disposé en amont du réchauffeur 46. Le rôle de la conduite 150 et de la valve 152 sera détaillé par la suite.

### Circuit d'oxygène et circuit d'oxygène vaporisé

Ces circuits sont sensiblement identiques à ceux que comporte l'ensemble propulsif 5, sauf que le réchauffeur 46 (oxygène/hydrogène) est remplacé par un réchauffeur 146 (oxygène/gaz d'échappement).

Le fonctionnement de l'ensemble 105 est globalement le même que celui de l'ensemble 5.

La principale différence est qu'en fonctionnement normal, les turbines 28A et 28B sont actionnées par la pression des gaz d'échappement circulant dans le circuit de gaz d'échappement, et non par la pression de l'hydrogène vaporisé par l'échangeur 36 (L'hydrogène vaporisé est directement injecté dans le moteur 10). Ces mêmes gaz d'échappement servent de plus, avantageusement, à vaporiser de l'oxygène et ainsi à assurer une pression constante dans le réservoir d'oxygène 30B.

En fonctionnement à basse poussée, l'oxygène est également vaporisé par les gaz d'échappement du circuit de gaz d'échappement. Cependant, dans ce mode de fonctionnement ces gaz ne servent pas à actionner les turbines 28A et 28B. La vanne 152 est ouverte, alors que la vanne 170 est fermée. Il s'ensuit que les conduites 138 et 140 n'assurent plus aucune circulation de gaz d'échappement à travers les turbines 28A et 28B. La circulation de gaz d'échappement se fait directement, via la conduite 150, des orifices de prélèvement de gaz d'échappement dans la chambre de combustion 12 jusqu'au piquage T3 de la conduite 115. Les gaz d'échappement assurent donc la fonction de vaporisation d'oxygène, ce qui permet d'alimenter le moteur 110 en oxygène vaporisé, avant d'être éjectés par l'orifice 116.

## Revendications

1. Ensemble propulsif (5,105) pour fusée, comprenant
un réservoir (30B) pour oxygène liquide,
un moteur (10,110) comprenant une chambre de combustion (12,112),
un échangeur thermique dit réchauffeur (46,146) apte à vaporiser de l'oxygène liquide, et
un circuit d'oxygène vaporisé (60) apte à diriger l'oxygène vaporisé par le réchauffeur, dans un premier mode de fonctionnement, uniquement vers la chambre de combustion ;
l'ensemble propulsif **se caractérisant en ce que**
l'ensemble propulsif comporte une conduite principale (54) d'alimentation du moteur en oxygène, apte à relier le réservoir (30B) à la chambre de combustion pour permettre l'alimentation du moteur en oxygène liquide ;
le circuit d'oxygène vaporisé (60) est apte à diriger l'oxygène vaporisé par le réchauffeur, dans un deuxième mode de fonctionnement, uniquement vers le réservoir ; et
le circuit d'oxygène vaporisé comporte des moyens de valve (56,64) permettant de relier sélectivement la chambre de combustion (12,112) soit à ladite conduite principale pour permettre son alimentation en oxygène liquide, soit au circuit d'oxygène vaporisé pour permettre son alimentation en oxygène vaporisé.

2. Ensemble propulsif selon la revendication 1, comprenant une conduite principale (54) d'alimentation du moteur en oxygène, apte à relier le réservoir (30B) à la chambre de combustion pour permettre l'alimentation du moteur en oxygène liquide, et dans lequel le circuit d'oxygène vaporisé comporte une partie de circuit (58,61,63) formée en dérivation entre des points de dérivation amont et aval (T1,T2) agencés sur la conduite principale.

3. Ensemble propulsif selon la revendication 2, dans lequel le moteur comporte une valve pour oxygène liquide (56), disposée sur la conduite principale entre lesdits points de dérivation amont et aval, et qui permet d'ouvrir ou de fermer la conduite principale.

4. Ensemble propulsif selon l'une quelconque des revendications 1 à 3, dans lequel le circuit d'oxygène comporte une valve à trois voies (64), apte à diriger le flux d'oxygène vaporisé provenant du réchauffeur (46) soit vers la chambre de combustion (12), soit vers le réservoir (30B).

5. Ensemble propulsif selon l'une quelconque des revendications 1 à 4, dans lequel le réchauffeur (146) est un échangeur thermique permettant l'échange de chaleur entre l'oxygène et des gaz d'échappement du moteur.

6. Ensemble propulsif selon la revendication 5, dont le réchauffeur (146) est agencé à distance de la chambre de combustion et d'une tuyère d'éjection du moteur.

7. Ensemble propulsif selon l'une quelconque des revendications 1 à 6, comprenant un circuit de gaz d'échappement (138,140) apte à injecter des gaz d'échappement dans au moins une turbine pour actionner celle(s)-ci.

8. Ensemble propulsif selon l'une quelconque des revendications 1 à 4, comprenant un circuit de circulation d'un fluide caloporteur (38,40,42), comprenant un échangeur thermique primaire (36) permettant qu'une énergie thermique soit cédée par des gaz d'échappement à un fluide caloporteur, ainsi que le réchauffeur (46), celui-ci constituant un échangeur thermique secondaire permettant qu'une énergie thermique soit cédée par le fluide caloporteur à l'oxygène.

9. Ensemble propulsif selon la revendication 8, dans lequel dans l'échangeur thermique primaire (46) est apte à vaporiser le fluide caloporteur, et un circuit de circulation de fluide caloporteur (38,40) permet d'injecter le fluide caloporteur vaporisé dans au moins une turbine pour actionner celle(s)-ci.

10. Ensemble propulsif selon la revendication 8 ou 9, dans lequel le fluide caloporteur est un autre ergol consommé par le moteur, par exemple de l'hydrogène.

## Patentansprüche

1. Antriebsanordnung (5, 105) für eine Rakete, umfassend
einen Tank (30B) für flüssigen Sauerstoff,
einen Motor (10, 110) mit einer Brennkammer (12, 112),
einen als Erhitzer (46, 146) bezeichneten Wärmetauscher, der geeignet ist, flüssigen Sauerstoff zu verdampfen, und
einen Kreislauf von verdampftem Sauerstoff (60), der geeignet ist, den durch den Erhitzer verdampften Sauerstoff in einer ersten Betriebsart nur in Richtung der Brennkammer zu leiten,
wobei die Antriebsanordnung **dadurch gekennzeichnet ist, dass**
die Antriebsanordnung eine Hauptleitung (54) zur Versorgung des Motors mit Sauerstoff umfasst, die geeignet ist, den Tank (30B) mit der Brennkammer zu verbinden, um zu ermöglichen, dass der Motor mit flüssigem Sauerstoff versorgt wird,
der Kreislauf von verdampftem Sauerstoff (60) geeignet ist, den durch den Erhitzer verdampften Sauerstoff in einer zweiten Betriebsart nur in Richtung des Tanks zu leiten, und
der Kreislauf von verdampftem Sauerstoff Ventilmittel (56, 64) zum selektiven Verbinden der Brennkammer (12, 112) entweder mit der Hauptleitung, um ihre Versorgung mit flüssigem Sauerstoff zu ermöglichen, oder mit dem Kreislauf von verdampftem Sauerstoff, um ihre Versorgung mit verdampftem Sauerstoff zu ermöglichen, umfasst.

2. Antriebsanordnung nach Anspruch 1, umfassend eine Hauptleitung (54) zur Versorgung des Motors mit Sauerstoff, die geeignet ist, den Tank (30B) mit der Brennkammer zu verbinden, um zu ermöglichen, dass der Motor mit flüssigem Sauerstoff versorgt wird, und in der der Kreislauf von verdampftem Sauerstoff einen Kreislaufabschnitt (58, 61, 63) umfasst, der als Bypass zwischen stromaufwärts und stromabwärts gelegenen Bypasspunkten (T1, T2) ausgebildet ist, die auf der Hauptleitung angeordnet sind.

3. Antriebsanordnung nach Anspruch 2, wobei der Motor ein Ventil für flüssigen Sauerstoff (56) umfasst, das an der Hauptleitung zwischen den stromaufwärts und stromabwärts gelegenen Bypasspunkten angeordnet ist und es ermöglicht, die Hauptleitung zu öffnen oder zu schließen.

4. Antriebsanordnung nach einem der Ansprüche 1 bis 3, wobei der Sauerstoffkreislauf ein Dreiwegeventil (64) umfasst, das geeignet ist, den Strom von verdampftem Sauerstoff aus dem Erhitzer (46) entweder in Richtung der Brennkammer (12) oder in Richtung des Tanks (30B) zu leiten.

5. Antriebsanordnung nach einem der Ansprüche 1 bis 4, wobei es sich bei dem Erhitzer (146) um einen Wärmetauscher zum Austausch von Wärme zwischen Sauerstoff und Motorabgasen handelt.

6. Antriebsanordnung nach Anspruch 5, bei der der Erhitzer (146) beabstandet zu der Brennkammer und einer Ausstoßdüse des Motors angeordnet ist.

7. Antriebsanordnung nach einem der Ansprüche 1 bis 6, umfassend einen Abgaskreislauf (138, 140), der geeignet ist, Abgas in mindestens eine Turbine einzuspritzen, um diese zu betreiben.

8. Antriebsanordnung nach einem der Ansprüche 1 bis 4, umfassend einen Kreislauf zur Zirkulation von Wärmeträgerfluiden (38, 40, 42), umfassend einen primären Wärmetauscher (36), der es ermöglicht, dass Wärmeenergie über Abgase auf ein Wärmeträgerfluid übertragen wird, und den Erhitzer (46), wobei letzterer einen sekundären Wärmetauscher darstellt, der es ermöglicht, dass Wärmeenergie über das Wärmeträgerfluid auf Sauerstoff übertragen wird.

9. Antriebsanordnung nach Anspruch 8, wobei in dem primären Wärmetauscher (46) das Wärmeträgerfluid verdampfen kann und ein Kreislauf zur Zirkulation des Wärmeträgerfluids (38, 40) ein Einspritzen des verdampften Wärmeträgerfluids in mindestens eine Turbine ermöglicht, um diese zu betreiben.

10. Antriebsanordnung nach Anspruch 8 oder 9, wobei es sich bei dem Wärmeträgerfluid um einen weiteren Treibstoff handelt, der von dem Motor verbraucht wird, zum Beispiel Wasserstoff.

## Claims

1. A propulsion assembly (5, 105) for a rocket, comprising
a tank (30B) for liquid oxygen,
an engine (10, 110) having a combustion chamber (12, 112),
a "heater" heat exchanger (46, 146) suitable for vaporizing liquid oxygen, and
a vaporized oxygen circuit (60) suitable in a first mode of operation for directing the oxygen vaporized by the heater solely to the combustion chamber;
the assembly being **characterized in that**
the propulsion assembly comprises a main pipe (54) for feeding the engine with oxygen, which pipe is suitable for connecting the tank (30B) to the combustion chamber in order to enable the engine to be fed with liquid oxygen;
the vaporized oxygen circuit (60) is suitable in a second mode of operation for directing the oxygen vaporized by the heater solely to the tank; and
the vaporized oxygen circuit includes valve means (56, 64) enabling the combustion chamber (12, 112) to be connected selectively either to said main pipe in order to enable it to be fed with liquid oxygen, or else to the vaporized oxygen circuit in order to enable it to be fed with vaporized oxygen.

2. A propulsion assembly according to claim 1, having a main pipe (54) for feeding the engine with oxygen, which pipe is suitable for connecting the tank (30B) to the combustion chamber in order to enable the engine to be fed with liquid oxygen; and wherein the vaporized oxygen circuit includes a circuit portion (58, 61, 63) arranged as a parallel connection between upstream and downstream tapping points (T1, T2) arranged on the main pipe.

3. A propulsion assembly according to claim 2, wherein the engine includes a liquid oxygen valve (56) arranged in the main pipe between said upstream and downstream tapping points, and enabling the main pipe to be opened or closed.

4. A propulsion assembly according to any one of claims 1 to 3, wherein the oxygen circuit includes a three-port valve (64) suitable for directing the stream of vaporized oxygen coming from the heater (46) either to the combustion chamber (12), or to the tank (30B).

5. A propulsion assembly according to any one of claims 1 to 4, wherein the heater (146) is a heat exchanger for exchanging heat between oxygen and exhaust gas from the engine.

6. A propulsion assembly according to claim 5, in which the heater (146) is arranged at a distance from the combustion chamber and from an ejection nozzle of the engine.

7. A propulsion assembly according to any one of claims 1 to 6, including an exhaust gas circuit (138, 140) suitable for injecting exhaust gas into at least one turbine in order to drive it.

8. A propulsion assembly according to any one of claims 1 to 4, including a heat-transfer fluid flow circuit (38, 40, 42) having a primary heat exchanger (36) enabling heat energy from the exhaust gas to be delivered to the heat-transfer fluid, and also the heater (46), which heater constitutes a secondary heat exchanger enabling heat energy from the heat-transfer fluid to be delivered to the oxygen.

9. A propulsion assembly according to claim 8, wherein the primary heat exchanger (46) is suitable for vaporizing the heat-transfer fluid, and a heat-transfer fluid flow circuit (38, 40) enables the vaporized heat-transfer fluid to be injected into at least one turbine in order to drive it.

10. A propulsion assembly according to claim 8 or 9, wherein the heat-transfer fluid is another propellant consumed by the engine, e.g. hydrogen.
